# FASCICULE DE BREVET EUROPEEN

(11) **EP 0 612 703 B1**
(45) Date de publication et mention de la délivrance du brevet: **02.12.1998**
(21) Numéro de dépôt: 94420063.3
(22) Date de dépôt: 21.02.1994
(51) Int. Cl.: C04B 35/52, F27D 19/00

(54) **Procédé de fabrication rapide de produits carbonés**
Verfahren zur schnellen Herstellung von kohlenstoffhaltigen Produkten
Process for rapid manufacture of carbonaceous products

(30) Priorité: 23.02.1993 FR 9302346
(43) Date de publication de la demande: 31.08.1994
(73) Titulaire: LE CARBONE LORRAINE, 92400 Courbevoie (FR)
(72) Inventeur: Bauer, Jean-Michel, F-54530 Pagny Sur Moselle (FR)
(74) Mandataire: Mougeot, Jean-Claude

(56) Documents cités:
- FR-A- 1 160 183
- FR-A- 2 153 800
- FR-A- 2 240 416
- US-A- 3 907 950
- US-A- 4 606 529
- PATENT ABSTRACTS OF JAPAN vol. 1, no. 362 (C-389)4 Décembre 1986 & JP-A-61 158 808 (TOSHIBA CERAMICS LTD) 18 Juillet 1986

## Description

### DOMAINE DE L'INVENTION

L'invention concerne le domaine de la fabrication de produits carbonés.

### ART ANTERIEUR

De manière habituelle, la fabrication de pièces ou produits carbonés comprend les étapes suivantes :
a) une étape de préparation d'une pièce crue consistant à mettre en forme une pâte à base de poudre de carbone et d'un liant, typiquement du brai ou du goudron, ou une résine. La mise en forme, typiquement par extrusion ou par compression, permet d'obtenir une pièce ayant sensiblement la forme et les dimensions de la pièce finale à obtenir.
b) une étape de cuisson (carbonisation) du produit cru permettant d'obtenir une pièce en carbone amorphe dit "dur". Cette cuisson s'effectue en chauffant la pièce crue depuis la température ambiante jusqu'à 800°C, voire 1300°C . Elle s'accompagne d'un départ de produits volatils résultant de la décomposition du liant (phase de déliantage).
On obtient ainsi une pièce cuite en carbone "dur" et poreux. Selon les caractéristiques finales recherchées pour la pièce carbonée finale, ces étapes essentielles peuvent être suivies d'étapes complémentaires destinées, à transformer la pièce cuite (en carbone dur) en pièce en graphite "tendre" par un procédé dit de graphitation (étape c facultative), et / ou à densifier le produit carboné, qu'il soit sous forme de carbone "dur" ou de graphite "tendre" par un procédé dit de densification (étape d facultative).
Un procédé de graphitation typique consiste à porter une pièce cuite, en carbone "dur" (poreux ou non), à une température supérieure à 2000°C et généralement de l'ordre de 2800°C pour avoir une vitesse de graphitation suffisante compatible avec un procédé industriel.

Les procédés typiques de densification comprennent, soit l'incorporation sous pression de résine liquide suivie d'une cuisson (généralement une telle densification comporte plusieurs cycles successifs d'incorporation de résine liquide et de cuisson), soit le dépôt chimique en phase vapeur (DCPV), typiquement par cracking de gaz riche en carbone à des températures généralement comprises entre 900 et 1800°C.

En définitive, de manière schématique, les pièces carbonées obtenues peuvent être, soit en carbone (dur), soit en graphite (tendre) pour ce qui est relatif à la variété allotropique de l'élément chimique C, soit poreux, soit peu ou pas poreux selon la densité du produit carboné final.

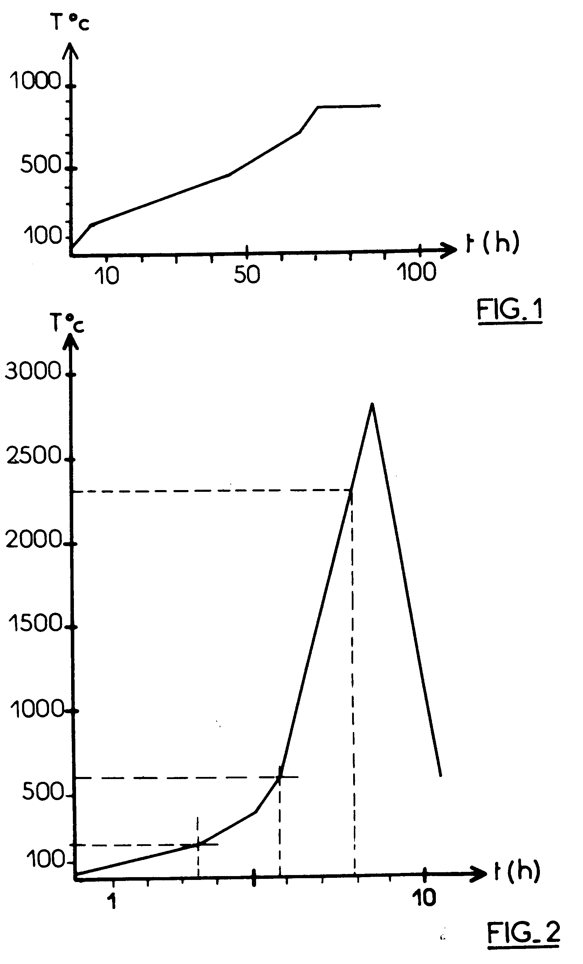

En ce qui concerne la technologie industrielle déjà connue pour la mise en oeuvre de ces différentes étapes, il importe de noter, de manière générique, que le traitement thermique du carbone nécessite de travailler en atmosphère non oxydante pour éviter la combustion de l'élément C.
La technologie utilisée en particulier pour l'étape b) de cuisson consiste à placer les pièces à cuire (pièces crues) soit directement dans des fours, soit dans des creusets destinés à être placés dans un four, et à protéger ces pièces contre l'oxydation en les recouvrant de poudre de carbone appelée "matière d'encasetage" (en anglais "heating filler"). Les fours, généralement chauffés au gaz ou au fioul, sont de différents types (fours à feu tournant, à chambre, tunnel, four "batch"...). Ils permettent d'atteindre une température maximale de 1300°C.
Typiquement, dans l'étape de cuisson, les pièces à cuire sont portées à une température de 850°C et la durée de cette étape correspond sensiblement à la durée de la montée en température.
Avec un four industriel de 100 m³ de capacité, cette montée dure typiquement de plusieurs jours à quelques semaines selon la taille et la formulation des pièces à cuire. Un diagramme "température °C - temps h" standard correspondant à cette étape de cuisson est représenté à la figure 1.
Toute accélération de la vitesse de chauffage conduit à la formation de pièces défectueuses, typiquement par apparition de fissures ou de ruptures.

La technologie de graphitation (étape c) fait appel aux propriétés électriques du carbone : on chauffe les pièces cuites à graphiter par passage direct d'un courant électrique dans un empilement de ces pièces, après les avoir protégées par de la poudre carbonée, ce qui est couramment réalisé dans un four du type "Acheson".
Ainsi, les opérations de cuisson et de graphitation sont généralement distinctes, font appel à des technologies différentes et nécessitent donc des transferts de pièces à traiter d'un four à un autre.
Cependant, comme décrit dans la demande de brevet JP-A-61 158 808, on peut aussi utiliser un four à induction, pour cuire puis graphiter une pièce carbonée dans un même four, dans le cas de produits crus très pauvres en matières volatiles.
Par ailleurs, parmi les technologies de densification (étape d), celle de DCPV nécessite des fours sous vide permettant, vers 1000°C, de maintenir une pression partielle de gaz de cracking relativement faible, de l'ordre de 2 kPa (20 millibar).
Cette opération s'effectue généralement sur pièces déjà graphitées, ayant donc déjà pris leur retrait définitif.

### PROBLEMES POSES

Dans le domaine de la fabrication de pièces carbonées (en carbone ou en graphite, plus ou moins poreuses), l'homme du métier n'a pu jusqu'à présent s'affranchir de deux contraintes que sont d'une part, la lenteur des cycles de fabrication (la durée totale d'un cycle complet de mise en forme / cuisson / graphitation / densification se compte en mois - typiquement 1 à 4 mois), et d'autre part la nécessité d'avoir divers équipements spécifiques pour chaque étape du procédé.
La durée d'une opération et le volume des investissements, ou équipements nécessaires pour la mise en oeuvre d'une opération, sont d'une importance capitale sur le plan économique (productivité, rentabilité du capital investi, rapidité de réponse face à la demande des clients, etc...).

Des progrès ont déjà été réalisés grâce à l'enseignement du brevet FR 2 153 800 dans le cas de pièces massives (de l'ordre de 100 kg et d'environ 40 cm d'épaisseur) en produits carbonés, pièces de grandes dimensions telles que les électrodes utilisées pour la fabrication de l'aluminium, qui peuvent être cuites rapidement après que la température à coeur du produit ait été portée entre 120 et 170°C.

Ces progrès n'ont pu être transposés aux produits étudiés par la demanderesse, essentiellement des pièces carbonées pour le génie chimique (exemples selon l'invention = tube des 6 mm d'épaisseur). Mais, même s'ils avaient été transposables, ils n'auraient que très partiellement résolu les problèmes qui restaient posés, typiquement :
- durée trop longue des cycles de production et faible souplesse de production,
- nécessité d'un large éventail d'équipements lourds et coûteux pour réaliser l'ensemble des variantes réquises de produits carbonés,
- coûts de production et de matière importants liès à la présence de matière d'encasetage dans nombre de procédés.

La demanderesse a cherché à résoudre simultanément tous ces problèmes pour améliorer fortement la rentabilité de ces procédés de fabrication de pièces carbonées.

### DESCRIPTION DE L'INVENTION

Selon l'invention, le procédé de fabrication de pièces carbonées comprend une étape a) de fabrication de pièces carbonées crues obtenues typiquement par mise en forme à chaud d'un mélange de poudre carbonée et d'un liant suivie d'un refroidissement, à température ambiante, desdites pièces carbonées formées, une étape b) de cuisson desdites pièces carbonées crues, dans un four, comprenant une montée en température desdites pièces carbonées crues de la température ambiante jusqu'à une température pouvant atteindre 1300°C, de manière à provoquer le départ de produits volatils et à obtenir des pièces carbonées cuites exemptes de produits volatils, et est caractérisé en ce que, de manière à augmenter la vitesse de ladite montée en température à l'étape b) de cuisson,
1) d'une part on place lesdites pièces carbonées crues (sans matière d'encasetage) dans un four à chauffage électrique et,
2) d'autre part, on choisit une vitesse de chauffage desdites pièces jusqu'à 200°C, avant le départ significatif desdits produits volatils (< 10% des produits volatils), en fonction de la vitesse dudit refroidissement de l'étape a), une augmentation de ladite vitesse de chauffage correspondant à une diminution de la vitesse de refroidissement à l'étape a), de manière à libérer les contraintes résultant de l'étape a), et,
3) enfin, on effectue ladite montée en température sous circulation d'une atmosphère gazeuse non-oxydante (flux gazeux de balayage) environnant lesdites pièces carbonées crues, en abaissant localement la pression partielle en produits volatils.

Face au problème posé par la longue durée des traitements thermiques de l'art antérieur (traitements de cuisson, de densification, de graphitation) dans le domaine de l'élaboration des matériaux carbonés, la demanderesse a montré que, contrairement à la pratique habituelle de l'homme du métier, des traitements thermiques rapides étaient possibles, pour l'ensemble de la gamme de traitements (de la température ambiante à la température de graphitation vers 2800°C).
Le rapport des durées de traitement selon l'invention et selon l'art antérieur est typiquement dans un rapport de 1 à 10, ce qui est considérable, et de la plus grande importance sur le plan économique.
Pour cela, la demanderesse a trouvé qu'il fallait associer trois moyens :
A) Le premier moyen est constitué par l'utilisation d'un four électrique sans matière d'encasetage, moyen unique de chauffage même pour l'étape de cuisson de pièces carbonées crus constituant des produits "gras", c'est à dire contenant typiquement plus de 20% en poids de liant carboné, le plus souvent un brai, ce qui conduit typiquement à la formation d'au moins 10% de matières volatiles.
   Si l'utilisation d'un four électrique est déjà connue en soi pour le traitement thermique de pièces carbonées (sans matières volatiles - ou avec matière d'encasetage en cas de départ de matières volatiles), l'intérêt de ce type de four étant lié, entre autres choses, à la puissance de chauffage disponible et à la facilité de régulation, par contre, la demanderesse a trouvé les conditions permettant l'utilisation d'un four électrique sans matière d'encasetage même pour la cuisson de pièces carbonées riches en brai (jusqu'à 50 % de brai en poids).
   En effet, un problème à résoudre est l'élimination "propre" des matières volatiles durant la phase de déliantage, c'est à dire une élimination qui ne pollue pas le four lui-même. Il n'aurait servi à rien d'obtenir un traitement thermique rapide s'il avait fallu ensuite consacrer beaucoup de temps au nettoyage du four.
   Or, sans matière d'encasetage, le risque était trop grand de voir certaines parties du four polluées. La demanderesse a eu la surprise de constater que, grâce aux conditions de l'invention, en particulier celles relatives au troisième moyen développé ci-après sous C), ce problème était résolu.
B) Selon le second moyen de l'invention, il importe de choisir, dans l'intervalle de température compris entre la température ordinaire et la température (typiquement 200°C), de début de départ significatif de produits volatils (ou déliantage), une vitesse de chauffage des pièces carbonées crues en fonction de la vitesse de refroidissement des pièces carbonées après mise en forme à chaud à l'étape a), de manière à libérer, avant le déliantage, les contraintes internes des pièces carbonées crues, contraintes qui, selon les travaux de la demanderesse, ont pour origine beaucoup plus la vitesse de refroidissement que la mise en forme proprement dite des pièces carbonées crues.
   Selon l'invention, on peut ainsi, en choisissant une vitesse de refroidissement faible à l'étape a), augmenter la vitesse de chauffage en début d'étape b), et ainsi optimiser les coûts de production compte tenu du coût des équipements en jeu pour chaque étape.
   Ainsi, la vitesse de chauffage à 200°C sera plus grande si le refroidissement de la pièce carbonée crue a lieu à l'air ambiant (mode préféré selon l'invention) plutôt qu'à l'eau.
   D'une manière générale, on réalise la libération des contraintes mécaniques des pièces carbonées avant le départ desdits produits volatils en choisissant une vitesse de chauffage desdites pièces carbonées crues, inférieure à 100°C/h jusqu'à une température de 200°C, d'autant plus basse que la vitesse de refroidissement des pièces carbonées crues est élevée à l'étape a).
   Il convient de noter que, dans le cas en particulier de pièces carbonées de faible épaisseur, telles que des tubes comme décrits dans les exemples, l'enseignement du brevet FR 2 153 800 est inopérant. En effet, la demanderesse a observé que, dans ce cas, il ne suffisait pas, pour obtenir des pièces finales saines (sans défauts physiques), d'amener la température à coeur de la pièce carbonée crue entre 120 et 170° avant de porter rapidement la pièce à plus haute température. Suite à ses travaux, la demanderesse en est arrivée à mettre en évidence le rôle essentiel de la phase de refroidissement à l'étape a) sur les possibilités de chauffage rapide avant 200°C à l'étape b). Ainsi, du moins pour les produits carbonés à parois minces, le critère de chauffage à coeur du FR2153800 était non pertinent, bien qu'il s'agisse dans tous les cas de relaxer des containtes internes.
C) Selon le troisième moyen de l'invention, une fois les contraintes relaxées, il est possible d'assurer, durant l'étape de cuisson (phase de déliantage), un départ rapide et "propre" des produits volatils en effectuant la montée en température des pièces à cuire, sans matière d'encasetage, sous circulation d'une atmosphère gazeuse non-oxydante, de manière à entraîner les produits volatils et en abaissant la pression partielle de ces produits.

Il est préférable d'avoir, dans l'atmosphère gazeuse environnant les pièces à cuire, en cours de cuisson, un rapport "masse de produits volatils / masse de gaz de ladite atmosphère non-oxydante" inférieur à 3 et de préférence inférieur à 1. Si ce rapport est trop élevé, on observe une perte totale ou partielle des caractéristiques mécaniques des pièces cuites. Si ce rapport est trop bas, il y a notamment une consomation excessive et inutile de gaz constituant l'atmosphère gazeuse non-oxydante. En pratique, ce rapport sera généralement supérieur à 0,5.
Il peut être avantageux de réaliser la phase de déliantage sous pression réduite, pression ( = pression partielle du gaz inerte de balayage constituant ladite atmosphère gazeuse non-oxydante + pression partielle des matières volatiles) typiquement inférieure de 0,6 à 0,9 fois la pression atmosphérique, grâce à une pompe à vide ou un extracteur (généralement placé en sortie d'un incinérateur), qui tirent les matières volatiles vers un incinérateur de matières volatiles.

En outre, la demanderesse a montré que l'ensemble des principaux traitements qui sont réalisés sur pièces carbonées crues pouvaient être mis en oeuvre, sans matière d'encasetage, dans un seul et unique four, un four électrique, et sans manipulation intermédiaire des produits à traiter.
Par principaux traitements, on entend les traitements de cuisson comprenant une phase d'élimination des produits volatils (déliantage) qui conduit à un matériau poreux, les traitements de densification par DCPV de matériau poreux obtenu après cuisson, les traitements de changement de variété allotropique, tel que la graphitation d'un matériau densifié ou non par DCPV.
Le procédé selon l'invention ne se limite pas à ces traitements, en particulier le procédé de densification par DCPV n'est pas limité au dépôt de carbone, généralement de carbone pyrolytique, bien qu'il s'agisse là du traitement de densification le plus courant.

En définitive, la demanderesse a montré qu'il y avait moyen d'associer qualité des pièces obtenues et rapidité des traitements thermiques, bien que, de tout temps, l'homme du métier ait plutôt associé qualité des pièces produites à la lenteur des traitements thermiques.

### DESCRIPTION DES FIGURES

La figure 1 est un diagramme correspondant à un traitement de cuisson selon l'art antérieur (exemple 1) et donnant la courbe de température en fonction du temps. La température (T°C) figure en ordonnée et le temps (h) en abscisse.

La figure 2 est un diagramme correspondant à un traitement de cuisson et de graphitation selon l'invention (exemple 3) et donnant la courbe de température en fonction du temps. La température (T°C) figure en ordonnée et le temps (h) en abscisse.

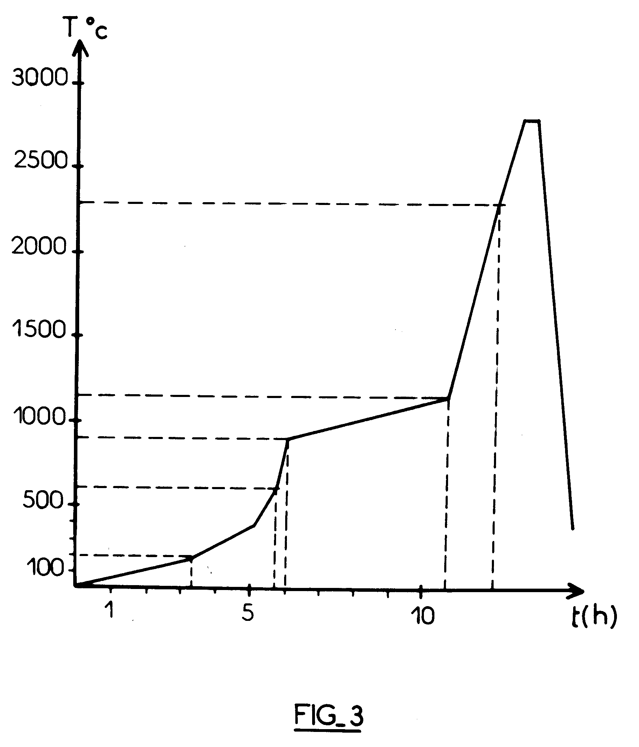

La figure 3 est un diagramme correspondant à un traitement de cuisson, de densification par DCPV et de graphitation selon l'invention (exemple 4) et donnant la courbe de température en fonction du temps. La température (T°C) figure en ordonnée et le temps (h) en abscisse.

La figure 4 représente une courbe typique de déliantage entre 200 et 600°C (exemple 3). En ordonnée figure, en valeur cumulée, le pourcentage de matière volatiles éliminées et en abscisse est porté le temps, une durée de 2,5 h correspondant à l'intervalle de température 200-600°C.
A partir de cette courbe et sur cet intervalle de température, on peut déduire le flux maximum (F_{M}) et le flux moyen (Fₘ) en matières volatiles expimant le pourcentage de matières volatiles totales éliminées par heure.

La figure 5 est une représentation schématique (coupe axiale pour le four) de l'équipement utilisé pour mettre en oeuvre l'invention. Cet équipement comprend :
a) un four électrique tubulaire (1) comprenant des moyens de chauffage (2), dans lequel sont placés, sans matière d'encasetage, des tubes (3) en matériau carboné cru de manière à ce qu'une circulation axiale de gaz inerte, autour et à l'intérieur de chaque tube puisse avoir lieu. On a représenté le front (16) d'avancée du flux gazeux (écoulement type "piston").
b) une alimentation en gaz (4) (un gaz A pouvant être le gaz inerte utilisé pendant la cuisson des pièces carbonées crues, un gaz B pouvant être le gaz carboné utilisé pour la densification par DCPV) et de moyens (5) de régulation du débit gazeux.
c) en sortie de four, des moyens de mesure du débit (6) du flux gazeux quittant le four, et eventuellement d'autres moyens tels qu'un four d'incinération (7) et une pompe à vide (8).
d) des moyens de commande, contrôle et régulation (9) du procédé, avec typiquement :
   * des moyens de commande (10) de la puissance de chauffage du four (1),
   * des moyens de mesure et de commande (11) du débit gazeux d'entrée De,
   * des moyens de mesure de la température (12) des tubes et de l'intérieur du four,
   * des moyens de mesure de la pression (13) à l'intérieur du four,
   * des moyens de commande (14) de la pompe à vide (8).
   * des moyens de mesure (15) du débit gazeux de sortie Ds.

### DESCRIPTION DETAILLEE DE L'INVENTION

Selon l'invention, on utilise, pour mettre en oeuvre les traitements auxquels on soumet les pièces carbonées crues, un four à chauffage électrique par résistance ou par induction.
Les pièces carbonées crues sont placées dans ces fours, sans ajout de poudre de carbone (matière d'encasetage), et généralement les pièces sont maintenues légèrement espacées entre elles pour favoriser l'élimination des produits volatils contenues dans lesdits produits carbonés crus.

Pour favoriser cette élimination, ladite atmosphère gazeuse non-oxydante circule à la surface desdites pièces carbonées (pièces non entourées de matière d'encasetage), avec un front gazeux avançant au moins à la vitesse de 0,5 cm/min (écoulement de type piston), et de préférence comprise entre 5 et 30 cm/min.
Cette atmosphère gazeuse non-oxydante est choisie de préférence parmi l'azote, l'argon et l'hélium.

En ce qui concerne le second moyen de l'invention, les études réalisées par la demanderesse ont montré que, si le refroidissement de la pièce carbonée crue à la sortie de la mise en forme se fait par trempe dans l'eau, le vitesse de chauffage ne devra pas dépasser 5°C/h pour des pièces peu massives produites selon l'invention, peu massive signifiant qu'au moins une dimension est inférieure à 20 cm et de préférence inférieure à 5cm.
Par contre, si le refroidissement de la pièce carbonée crue à la sortie de la mise en forme se fait à l'air à la température ambiante, alors une vitesse de chauffage de 50°C/h jusqu'à 100°C/h est possible.
Si on adopte une vitesse de chauffage jusqu'à 200°C plus élevée que ce que permet la vitesse de refroidissement à l'étape a), alors, il n'est pas possible d'obtenir, par traitement thermique rapide à température supérieure à 200°C, des pièces finales de qualité (voir exemple 5).

La demanderesse a étudié particulièrement les cinétiques de cuisson en relation avec le déliantage, et les moyens à mettre en oeuvre pour que cette étape, étape pratiquement obligée pour tout procédé de fabrication de matériau carboné, conduise à des produits de qualité. Elle a trouvé qu'un moyen assurant la fiabilité de production industrielle consistait à asservir la vitesse de ladite montée en température au flux de produit volatil qui se dégage, de manière à obtenir un flux prédéterminé.
En particulier, ledit flux prédéterminé est maintenu entre 5 et 65% de la masse totale de produit volatil/h et, de préférence, entre 20 et 40 % de la masse totale de produit volatil/h.

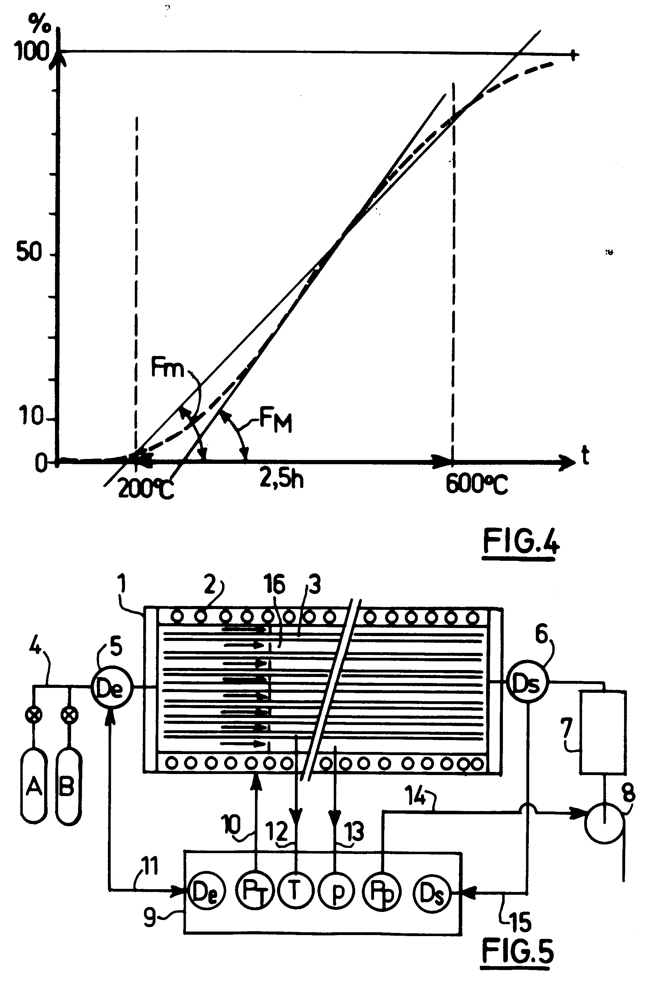

Ces valeurs ont été établies à partir d'essais préliminaires durant lesquels des courbes telles que celle représentée à la figure 4 sont établies.
On peut aussi exprimer ledit flux prédéterminé, en particulier dans la plage de température (typiquement 200-600°C) où ce flux est important, par un flux moyen Fₘ et/ou un flux maximum F_{M}. En pratique, les moyens informatiques associés au procédé permettent de stocker une courbe de déliantage, telle que celle de la figure 4, et d'assurer la conduite du four, notamment le chauffage en fonction du temps, pour obtenir la courbe de déliantage souhaitée.

Le procédé selon l'invention peut ne comporter qu'une étape de cuisson ou carbonisation conduisant à des pièces carbonées cuites, ce qui permet d'obtenir des pièces relativement légères et poreuses.
Mais le procédé est particulièrement avantageux lorsqu'il comprend en plus une étape d) de densification des pièces carbonées cuites et/ou une étape c) de graphitation.

En effet, dans le cas d'une étape de graphitation des pièces carbonées cuites, cette étape est réalisée dans ledit même four que celui ayant servi à l'étape de cuisson, sans matière d'encasetage et sous atmosphère non-oxydante (atmosphère typiquement d'azote ou d'argon à pression atmosphérique ou pression réduite ou sous vide) environnant lesdites pièces carbonées cuites, en portant lesdites pièces carbonées cuites (densifiées ou non par DCPV) à une température d'au moins 2300°C avec une vitesse de montée comprise entre 400°C/h et 1900°C/h, et de préférence voisine de 800°C/h.

De même, dans le cas d'une étape de densification, l'étape d) de densification, par dépôt chimique en phase vapeur (DCPV), de pièces carbonées cuites est réalisée dans ledit même four par cracking d'un gaz riche en carbone (méthane ou gaz naturel) sous pression réduite à des températures comprises entre 800 et 1200°C, de manière à obtenir des pièces carbonées denses. Il est donc particulièrement avantageux de réaliser la densification directement à la suite de la carbonisation, et de préférence avant une éventuelle étape de graphitation, et cela pour deux raisons :
- d'une part, en procédant ainsi, le coût de la densification est quasi nul et se réduit sensiblement à un coût de matière (gaz riche en carbone), cette étape étant pratiquement masquée par la montée en température depuis la température de fin de cuisson jusqu'aux températures élevées de graphitation.
- d'autre part, en réalisant la densification avant l'étape de graphitation, on densifie une pièce avant son retrait définitif, qui est atteint seulement après graphitation, ce qui permet d'obtenir des pièces de densité particulièrement élevée, typiquement plus élevée de 3% par rapport à celle d'une pièce graphitée d'abord et densifiée ensuite.
Cependant, pour obtenir la densification maximum, il est avantageux de réaliser une seconde densification par DCPV, après l'étape de graphitation, lors du refroidissement de ladite pièce graphitée dans ledit même four.

D'une manière générale, l'invention permet d'obtenir une large gamme de produits carbonés variant par leur densité et leur nature, simplement en combinant les étapes obligatoires du procédé (étapes a et b) avec éventuellement une étape de graphitation (étape c) et/ou au moins une étape de densification (étape d), en mettant donc en oeuvre différents procédés selon l'invention. Ces différents procédés peuvent être désignés symboliquement par la succession de leurs étapes (les étapes a, b, c & d ayant la même signification que précédemment) : "ab", "abc", "abd", "abdc", "abcd" et "abdcd", le procédé "ab" conduisant au produit le moins dense et le procédé "abdcd" conduisant au produit le plus dense.

Il est important de noter l'absence totale de manipulation de produits carbonés intermédiaires pour passer d'une étape à l'autre du procédé, quel que soit le procédé choisi, ce qui représente une économie de main d'oeuvre très importante.

En outre, le procédé selon l'invention permet une conduite automatisée du procédé. En effet, comme illustré à titre d'exemple à la figure 5, il est avantageux de munir le four de moyens permettant de réguler l'apport d'énergie de chauffage et ainsi de piloter la température et la vitesse de chauffage desdites pièces carbonées (crues ou cuites, graphitées ou non, denses ou non), et de moyens de régulation du flux gazeux de balayage, de manière à maîtriser la nature, la pression et le débit de l'atmosphère gazeuse environnant lesdites pièces carbonées, et pouvoir ainsi réaliser automatiquement, selon des consignes prédéterminées, les étapes b) et éventuellement c) et/ou d) dudit procédé (une étape d) étant de préférence réalisée selon l'invention avant l'étape c).
Pour cela, on peut d'une part munir ledit four de moyens (capteurs) permettant de mesurer le flux de produit volatil qui se dégage et de moyens pour asservir à cedit flux ledit flux gazeux de balayage et ledit apport d'énergie de chauffage de manière à maintenir à une valeur prédéterminé le flux de produit volatil dégagé (quantité de produit volatil qui se dégage par heure).
Une telle conduite automatisée contribue à assurer la fiabilité et reproductibilité du procédé selon l'invention.

### EXEMPLES DE REALISATION

Tous les exemples correspondent à des essais industriels réalisés à partir des mêmes pièces carbonées crues.
Pour cela, on a formé des tubes par malaxage de poudre de carbone et de brai et extrusion à chaud et refroidissement à l'air en sortie d'extrudeuse.
Ces tubes crus ont les dimensions suivantes :
Longueur : 4,5 m
Diamètre extérieur : 37 mm
Diamètre intérieur : 25 mm
Teneur en brai : 28 à 30% en poids
Teneur pondérale en matières volatiles : 14 à 15%

### Exemple 1

Cet exemple correspond à l'étape de cuisson ou carbonisation selon l'art antérieur.
On a placé les tubes crus dans un four Riedhammer (marque déposée) et on les a recouverts de poudre de carbone servant de matière d'encasetage.
En ce qui concerne la durée de l'étape de chauffage proprement dit (hors chargement, refroidissement, déchargement), et la montée en température, elles sont données par la figure 1, sur laquelle on peut voir que la durée de l'étape de chauffage elle-même est de 90 h.
Mais globalement, l'étape complète dure 13 jours (5 jours pour la cuisson et 8 jours pour le refroidissement).

### Exemple 2

Cet exemple correspond à l'étape de graphitation selon l'art antérieur.
On a monté d'abord un four type "Acheson" à partir d'éléments en graphite. On a placé les tubes cuits en les entourant de poudre de graphite. Durée : 8 jours.
On a porté les pièces à graphiter à la température de graphitation vers 2800 - 3000°C. Durée : 15 jours.
Durée de refroidissement : 15 jours.
Durée totale pour obtenir des tubes graphités à partir de tubes cuits : 38 jours.

### Exemple 3

Cet exemple selon l'invention décrit un traitement thermique de tubes crus comprenant une étape de cuisson ou carbonisation et une étape de graphitation.
Cet essai a porté sur 160 tubes soit 800 kg de matériau carboné cru.
Pour cela, les tubes crus ont été placés dans un four électrique (chauffage à induction) du commerce muni de moyens de balayage sous azote, les tubes étant espacés avec des cales de manière à ce que leur surface externe soit soumise au balayage sous azote (atmosphère non-oxydante), au moins durant la phase de déliantage.
Ce four est de forme cylindrique de 5 m de longueur et de **diamètre intérieur utile de 80 cm,** comme schématisé à la figure 5.
Le balayage d'azote (atmosphère non-oxydante) d'une extrémité à l'autre du four cylindrique correspond à un front (16) avançant à la vitesse de 20 cm/min.
On a imposé aux tubes carbonés les vitesses de chauffage suivantes (voir figure 2) :
- Etape a) : vitesse de chauffage de 60°C/h pour passer de 20 à 200°C. Durée : 3,33 h
- Etape b) de déliantage (élimination des produits volatils) et de cuisson :
   Les vitesses de chauffage sont :
   * en moyenne de 110°C/h de 200 à 400°C (pendant 1,82h)
   * en moyenne de 300°C/h de 400 à 600°C (pendant 0,66h)
En 2,5 h, entre 200 et 600°C, la quantité de matières volatiles éliminées s'est élevée à 94 kg (soit 84% du total des matières volatiles), ce qui correspond à un flux moyen Fₘ en produits volatils de 37,6 kg/h, avec un flux maximum F_{M} inférieur à 45 kg/h. La puissance de chauffage et la température des pièces carbonées ont été asservies à la vitesse de déliantage, de manière à obtenir le flux moyen précité (37,6 kg/h) sur l'intervalle de température 200-600°C, sans dépasser le flux maximum (45 kg/h), ces flux étant adaptés aux produits carbonés de cet essai, mais pouvant varier en fonction des carcatéristiques géométriques des produits carbonés.
Si on procédait à une montée en température à puissance de chauffage maximum, et sans limitation ni contrôle du flux de matières volatiles, alors le taux de pièces défecteuses augmenterait et la qualité deviendrait plus aléatoire.

Le débit d'azote a été choisi de manière à ce que le rapport "masse de produits volatils / masse d'azote (ladite atmosphère non-oxydante)" soit voisin de 0,85 durant l'étape b) de déliantage, avec, compte tenu d'une section disponible (non occupée par la section des tubes) de 2100 cm² environ de l'intérieur du four cylindrique, une vitesse d'avance de l'ordre de 20 cm/min du front gazeux dans le four tubulaire (écoulement de type "piston" = front qui avance sensiblement perpendiculairement à l'axe du four cylindrique de longueur relativement grande par rapport à son diamètre).
- Etape de graphitation : 800°C/h
   Durée : 2,75 h pour passer de 600 à 2800°C
   18 kg de matières volatiles lourdes condensables ont été éliminées surtout entre 600 et 1000°.

En tout, entre 200 et 1000°C, 112 kg de matières volatiles ont été éliminées soit 14% en poids de la masse initiale des tubes crus).

Compte tenu de l'ensemble du cycle (chargement, refroidissement et déchargement), la durée totale est légèrement inférieure à 24 h. A comparer aux 41 jours (13+28) des exemples 1 et 2.
Les tubes obtenus sont, dans plus de 98% des pièces produites, exempts de défauts physiques (déformations, ruptures, fentes, craquelures, etc...).

### Exemple 4

Cet exemple est analogue à l'exemple 3, mais il en diffère en ce qu'il comporte une étape de densification par DCPV, comprise entre l'étape de cuisson et l'étape de graphitation. Durant cette étape de densification, le balayage à l'azote a été remplacé par un balayage de méthane sous une pression de 20 millibar (2 kPa).
On a imposé aux tubes carbonés les vitesses de chauffage suivantes (voir figure 2) :
- Etape a) : vitesse de chauffage de 60°C/h pour passer de 20 à 200°C. Durée : 3,33 h.
- Etape b) de déliantage et de cuisson :
   Les vitesses de chauffage sont :
   * 110°C/h de 200 à 400°C (pendant 1,82h)
   * 300°C/h de 400 à 600°C (pendant 0,66h)
   * 800°C/h de 600 à 900°C (pendant 0,37h)

- Etape de densification par DCPV : 50°C/h
   Durée : 5h pour passer de 900°C à 1150°C
- Etape de graphitation : 800°C/h
   Durée : 2,06 h pour passer de 1150°C à 2800°C.
   La durée totale, compte tenu du chargement/déchargement et du refroidissement est voisine de 24h.
   Les tubes obtenus sont, comme ceux de l'exemple 3, exempts de défauts physiques.

### Exemple 5

Dans cet exemple, analogue à celui de l'exemple 3, on a réalisé plusieurs tests en instrumentant des tubes crus de manière à enregistrer la température à coeur des tubes durant la montée en température de 20° jusqu'à 200°C.
En faisant varier la puissance du four, et sans doute, grâce à la circulation de gaz inerte, on a réalisé plusieurs montées en température rapides de 20 à 200°C (température à coeur) :
test 5a : montée en 30 min (soit 360°C/h)
test 5b : montée en 1 h (soit 180°C/h)
test 5c : montée rapide, en 1 h, de 20 à 160°C (au lieu de 200°C) (température à coeur du tube dans son épaisseur), soit avec une vitesse de chauffage à coeur de 140°C/h.
Après poursuite du traitement comme à l'exemple 3 (dans le cas du test 5c : montée de 160°C à 400°C avec une vitesse de chauffage de 110°C/h comme dans l'exemple 3), les produits obtenus présentaient, à plus de 90%, des défauts physiques incluant de nombreuses ruptures de tubes.
Ces tests illustrent le fait qu'est non significatif le critère de la température à coeur des pièces carbonées qu'il faut atteindre, durant la première partie de l'étape b), avant d'augmenter la vitesse de chauffage, comme indiqué dans le brevet FR 2 153 800.
On a fait également un test 5d, qui ne diffère du test 5c qu'en ce que la montée de 160°C à 600°C a été réalisée en 1,25h, de manière à reproduire, comme préconisé dans le FR 2 153 800, une introduction rapide, dans un four à 700°C, d'une pièce dont la température à coeur a déjà atteint 160°C. Dans ce cas, on a obtenu des pièces carbonées présentant de nombreux défauts.

### Exemple 6

Cet exemple, selon l'invention, est analogue à l'exemple 4, sauf en ce qu'il n'y a pas d'étape de graphitation.

### Exemple 7

Cet exemple, selon l'invention, est analogue à l'exemple 3, sauf en ce q'il n'y a pas d'étape de graphitation, et que la cuisson se termine, au-délà de 600°C par un chauffage jusqu'à 900°C en 25 min.

### Exemple 8

Cet exemple, selon l'invention, est analogue à l'exemple 4, sauf en ce qu'il comporte une double densification par DCPV : d'une part une première densification réalisée lors de la montée en température jusqu'à la température de graphitisation (comme décrit dans l'exemple 4), d'autre part, une seconde densification réalisée lors du refroidissement des tubes après graphitation. Ce complément de densification vers 1150°C conduit à un matériau plus dense que celui obtenu à l'exemple 4 constitué essentiellement de graphite et d'un peu de carbone laminaire rugueux déposé lors de la seconde densification.

Les tubes obtenus aux exemples 3, 4, 6, 7 et 8 selon l'invention sont sensiblement de qualité comparable en ce qui concerne la présence de défauts physiques (ruptures, fissures, etc...), par contre, ils diffèrent par la nature du matériau (carbone ou graphite) et sa densité / sa porosité:

| MATERIAU des tubes ("procédé") | dense | poreux |
|---|---|---|
| en carbone | exemple 6 ("abd") | exemple 7 ("ab") |
| en graphite | exemple 4 ("abdc") | exemple 3 ("abc") |
| en graphite (+carbone) | exemple 8 ("abdcd") | |

### AVANTAGES DE L'INVENTION

Comme déjà mentionné, l'invention présente de très importants avantages d'ordre économique par rapport à l'art antérieur puisque :
- un seul équipement suffit là où l'art antérieur utilisait deux ou trois équipements différents,
- les coûts de main d'oeuvre sont diminués dans un rapport de l'ordre de 1 à 20,
- les coûts de matière sont fortement diminués, par la non-utilisation de matière d'encasetage essentiellement,
- le fonds de roulement est fortement diminué puisqu'il n'y a plus à financer pendant plusieurs mois des produits en cours de fabrication.
- le procédé selon l'invention permet de traiter en pratique tous les produits carbonés crus, quelle que soit leur teneur en brai de départ, typiquement jusqu'à 50% en poids, sans rencontrer de problème de salissure du four ou de qualité finale des produits carbonés cuits, ce qui montre la polyvalence du procédé selon l'invention.

En outre, l'invention permet d'obtenir, sans surcoûts, des pièces plus denses que celles typiquement obtenues par l'art antérieur (procédé abdcd)
Enfin, l'invention permet de répondre très rapidement à toute commande, ce qui correspond à un avantage commercial très grand.

### APPLICATION

Les moyens décrits dans l'invention s'appliquent à la fabrication de pièces carbonées, typiquement mises en forme par compression ou extrusion, pièces qui sont des pièces de forme, dont des tubes, illustrés dans les exemples selon l'invention ne constituent qu'un exemple non limitatif.

## Revendications

1. Procédé de fabrication de pièces carbonées comprenant une étape a) de fabrication de pièces carbonées crues obtenues typiquement par mise en forme à chaud d'un mélange de poudre carbonée et d'un liant, suivie d'un refroidissement, à température ambiante, desdites pièces carbonées formées, une étape b) de cuisson desdites pièces carbonées crues, dans un four, comprenant une montée en température desdites pièces carbonées crues de la température ambiante jusqu'à une température pouvant dépasser 800°C entraînant le départ de produits volatils (déliantage), de manière à obtenir des pièces carbonées cuites exemptes de produits volatils, caractérisé en ce que, de manière à augmenter la vitesse de ladite montée en température à l'étape b) de cuisson,
1) d'une part on place lesdites pièces carbonées crues (sans matière d'encasetage) dans un four à chauffage électrique et,
2) d'autre part, on choisit une vitesse de chauffage desdites pièces jusqu'à 200°C, avant le départ significatif desdits produits volatils (< 10% des produits volatils), en fonction de la vitesse dudit refroidissement de l'étape a), une augmentation de ladite vitesse de chauffage correspondant à une diminution de la vitesse de refroidissement à l'étape a), de manière à libérer les contraintes résultant de l'étape a), et,
3) enfin, on effectue ladite montée en température sous circulation d'une atmosphère gazeuse non-oxydante (flux gazeux de balayage) environnant lesdites pièces carbonées crues, en abaissant localement la pression partielle en produits volatils.

2. Procédé selon la revendication 1 dans lequel on utilise un four à chauffage électrique par résistance ou par induction.

3. Procédé selon la revendication 2 dans lequel, de manière à favoriser l'élimination des produits volatils contenus dans lesdits produits carbonés crus, ladite atmosphère gazeuse non-oxydante circule à la surface desdites pièces carbonées (pièces non entourées de poudre de protection) avec un front gazeux avançant au moins à la vitesse de 0,5 cm/min et de préférence entre 5 cm/min et 30 cm/min.

4. Procédé selon la revendication 3 dans lequel on choisit ladite atmosphère gazeuse non-oxydante, de préférence parmi l'azote, l'argon et l'helium.

5. Procédé selon une quelconque des revendications 1 à 4 dans lequel on réalise la libération des contraintes mécaniques avant le départ desdits produits volatils en choisissant une vitesse de chauffage desdites pièces carbonées crues, inférieure à 100°C/h jusqu'à une température de 200°C, et d'autant plus basse que la vitesse de refroidissement des pièces carbonées crues est élevée à l'étape a).

6. Procédé selon une quelconque des revendications 1 à 5 dans lequel la vitesse de ladite montée en température est asservie au flux de produits volatils qui se dégagent, de manière à obtenir un flux prédéterminé.

7. Procédé selon la revendication 6 dans lequel ledit flux prédéterminé est maintenu entre 5 et 65% en poids de la masse totale de produits volatils / h.

8. Procédé selon la revendication 7 dans lequel ledit flux prédéterminé est de préférence maintenu entre 20 et 40 % en poids de la masse totale de produit volatil / h.

9. Procédé selon une quelconque des revendications 1 à 8 dans lequel le rapport "masse de produits volatils / masse de gaz de ladite atmosphère non-oxydante" est maintenu inférieur à 3 et de préférence inférieur à 1, dans l'atmosphère gazeuse environnant les pièces à cuire, en cours de cuisson.

10. Procédé selon la revendication 9 dans lequel, de manière à limiter au strict nécessaire la consommation dudit gaz, on a asservi le débit dudit gaz à la vitesse de volatilisation des produits volatils, de façon à ce que ledit rapport conserve une valeur sensiblement constante et voisine de 1 durant toute la phase de cuisson.

11. Procédé selon une quelconque des revendications 1 à 10 comprenant une étape d) de densification de pièces carbonées cuites par dépôt chimique en phase vapeur (DCPV), étape réalisée dans ledit même four par cracking d'un gaz riche en carbone (méthane ou gaz naturel) sous pression réduite à des températures comprises entre 800 et 1200°C, de manière à obtenir des pièces carbonées denses.

12. Procédé selon une quelconque des revendications 1 à 11 comprenant une étape c) de graphitation desdites pièces carbonées cuites (densifiées ou non par DCPV), étape réalisée dans ledit même four, sans matière d'encasetage, sous atmosphère non-oxydante (atmosphère typiquement d'azote ou d'argon à pression atmosphérique ou pression réduite ou sous vide) environnant lesdites pièces carbonées cuites, en portant lesdites pièces carbonées cuites à une température d'au moins 2300°C avec une vitesse de montée comprise entre 400°C/h et 1900°C, et de préférence voisine de 800°C/h.

13. Procédé selon la revendication 12 dans lequel ladite étape de graphitation c) est suivie, d'une étape de densification, de manière à utiliser le refroidissement d'une pièce graphitée pour la densifier davantage dans ledit même four.

14. Procédé selon une quelconque des revendications 1 à 13 dans lequel ledit four est muni de moyens permettant de réguler l'apport d'énergie de chauffage et piloter la température desdites pièces carbonées (crues ou cuites, graphitées ou non, denses ou non), et de moyens de régulation dudit flux gazeux de balayage, de manière à maîtriser la nature, la pression et le débit de l'atmosphère gazeuse environnant lesdites pièces carbonées, et pouvoir ainsi réaliser automatiquement, selon des consignes prédéterminées, les étapes b) et éventuellement c) et/ou d) dudit procédé.

15. Procédé selon la revendication 14 dans lequel ledit four est muni de moyens permettant de mesurer le flux de produits volatils qui se dégagent et de moyens pour asservir à ce dit flux ledit flux gazeux de balayage et ledit apport d'énergie de chauffage de manière à maintenir à une valeur prédéterminé le flux de produits volatils dégagés (quantité de produits volatils qui se dégagent par heure).

16. Procédé selon la revendication 14 dans lequel ledit four est muni de moyens permettant de mémoriser une courbe de température en fonction du temps (notamment vitesse de montée) prédéterminée, obtenue à partir de tests préalables, et de piloter ladite température desdites pièces carbonées selon ladite courbe de température, de manière à ce que la température réelle desdites pièces carbonées au cours du temps suive ladite courbe de température.

## Claims

1. A process for manufacturing carbonaceous pieces comprising a step a) for manufacturing crude carbonaceous pieces which are typically obtained by heat shaping a mixture of carbonaceous powder and a bonding agent, followed by a cooling operation, at ambient temperature, of said carbonaceous pieces shaped, a step b) for firing said crude carbonaceous pieces in a furnace, comprising a temperature rise of said crude carbonaceous pieces from ambient temperature to a temperature which can exceed 800°c, bringing about the departure of volatile products (debonding) in such a way that fired carbonaceous pieces are obtained which have no volatile products, characterised in that in order to increase the speed of said temperature increase in firing step b),
1) said crude carbonaceous pieces are first of all placed (without any heating filler) in an electrical heating furnace and
2) a heating speed is then selected for said pieces up to 200°C prior to any significant departure of said volatile products (< 10% of the volatile products) as a function of the speed of said cooling process in step a), an increase to said heating speed corresponding to a reduction in the cooling speed in step a), in such a way that the stresses resulting from step a) are freed, and
3) said temperature increase is carried out by circulating a non-oxidising gaseous atmosphere (gaseous sweeping flow) around said crude carbonaceous pieces, by locally reducing the partial pressure of the volatile products.

2. A process according to Claim 1, wherein an electrical resistance or induction heating furnace is used.

3. A process according to Claim 2 in which in order to promote the elimination of volatile products contained in said crude carbonaceous products said non-oxidising gaseous atmosphere circulates at the surface of said carbonaceous pieces (pieces not surrounded by protective powder) with a gaseous front which advances at least at the speed of 0.5 cm/min and preferably between 5 cm/min and 30 cm/min.

4. A process according to Claim 3, in which said non-oxidising gaseous atmosphere is selected, preferably from nitrogen, argon and helium.

5. A process according to any one of Claims 1 to 4 in which the mechanical stresses are freed prior to the departure of said volatile products by selecting a heating speed for said crude carbonaceous pieces which is less than 100°C/h up to a temperature of 200°C, and which becomes lower as the cooling speed of the crude carbonaceous pieces increases in step a).

6. A process according to any one of Claims 1 to 5 in which the speed of said temperature increase is governed by the flux of volatile products which are set free, in such a way that a given flux is obtained.

7. A process according to Claim 6 in which said given flux is kept between 5 and 65% by weight of the total mass of volatile products / h.

8. A process according to Claim 7 in which said given flux is preferably kept between 20 and 40% by weight of the total mass of the volatile product / h.

9. A process according to any one of Claims 1 to 8 in which the ratio of "mass of volatile products / mass of gas in said non-oxidising atmosphere" is kept to less than 3 and to preferably less than 1 in the gaseous atmosphere surrounding the pieces to be fired during the firing operation.

10. A process according to Claim 9 in which in order to limit the consumption of said gas in the way which is strictly necessary the flow of said gas is governed by the volatilization speed of the volatile products, in such a way that said ratio maintains a value which is basically constant and close to 1 throughout the firing phase.

11. A process according to any one of Claims 1 to 10 comprising a step d) for densification of the crude carbonaceous pieces through chemical deposition in vapour phase (CDVP), which step is carried out in said same furnace by the cracking of a gas with a high carbon content (methane or natural gas) at reduced pressure at temperatures of between 800 and 1200°C, in such a way that dense carbonaceous pieces are obtained.

12. A process according to any one of Claims 1 to 11 comprising a step c) for graphiting said crude carbonaceous pieces (which have been densified, or not, by CDVP), which step is carried out in said same furnace, without any heating filler, in a non-oxidising atmosphere (atmosphere typically of nitrogen or argon at atmospheric pressure or at reduced pressure under vacuum) surrounding said crude carbonaceous pieces, bringing said crude carbonaceous pieces to a temperature of at least 2300°C at a increase speed of between 400°C/h and 1900°C, preferably close to 800°C/h.

13. A process according to Claim 12 in which said graphiting step c) is followed by a densification step in such a way that the operation for cooling a graphited piece is used to further densify it in said same furnace.

14. A process according to any one of Claims 1 to 13 in which said furnace is provided with means which make it possible to regulate the amount of heating energy provided and to pilot control the temperature of said carbonaceous pieces (crude or fired, graphited or not, dense or otherwise), and means for controlling said gaseous sweeping flux, in such a way as to control the type, pressure and flow of the gaseous atmosphere surrounding said carbonaceous pieces, and to thus be able to carry out steps b) and possibly step c) and/or step d) of said process automatically in accordance with given requirements.

15. A process according to Claim 14 in which said furnace is provided with means which make it possible to measure the flux of volatile products which are freed and means for making said gaseous sweeping flux and said heating energy supplied be governed by said flux in such a way that the flux of volatile products set free is kept at a given value (amount of volatile products which are set free per hour).

16. A process according to Claim 14 in which said furnace is provided with means which make it possible for a temperature curve to be memorised as a function of the given time (in particular, increase speed), obtained from initial tests, and for providing pilot control of said temperature of said carbonaceous pieces along said temperature curve, in such a way that the real temperature of said carbonaceous pieces follows said temperature curve with the passage of time.

## Patentansprüche

1. Verfahren zur Herstellung kohlenstoffhaltiger Werkstücke, umfassend eine Phase a), in der unbearbeitete kohlenstoffhaltige Werkstücke typischerweise durch Warmformen eines Gemisches aus kohlenstoffhaltigem Pulver und einem Bindemittel und anschließende Abkühlung bei Umgebungstemperatur der geformten kohlenstoffhaltigen Werkstücke hergestellt werden, eine Phase b), in der die unbearbeiteten kohlenstoffhaltigen Werkstücke in einem Ofen gebrannt werden und die Temperatur der unbearbeiteten kohlenstoffhaltigen Werkstücke von der Umgebungstemperatur bis auf eine Temperatur ansteigt, die höher als 800°C sein kann und den Abgang der flüchtigen Produkte (Abbindung) bewirkt, so daß gebrannte kohlenstoffhaltige Werkstücke entstehen, die frei von flüchtigen Produkten sind, dadurch gekennzeichnet, daß zur Erhöhung der Temperaturanstiegsgeschwindigkeit in der Brennphase b)
1) zum einen die unbearbeiteten kohlenstoffhaltigen Werkstücke (ohne Isoliermaterial) in einen elektrischen Ofen eingebracht werden und
2) zum anderen eine Erhitzungsgeschwindigkeit der Werkstücke bis zu 200°C vor dem nennenswerten Abgang der flüchtigen Produkte (< 10 % der flüchtigen Produkte) in Abhängigkeit von der der Abkühlungsgeschwindigkeit der Phase a) gewählt wird, wobei eine Erhöhung der Erhitzungsgeschwindigkeit einer Verringerung der Abkühlungsgeschwindigkeit in der Phase a) entspricht, um die aus der Phase a) resultierenden Spannungen freizugeben,
3) und schließlich der Temperaturanstieg in einer umlaufenden nicht oxidierenden Gasatmosphäre (Spülgasstrom) erfolgt, die die unbearbeiteten kohlenstoffhaltigen Werkstücke umgibt, indem der Teildruck der flüchtigen Produkte örtlich reduziert wird.

2. Verfahren nach Anspruch 1, bei dem ein elektrischer Widerstands- oder Induktionsofen verwendet wird.

3. Verfahren nach Anspruch 2, bei dem zur wirksamen Beseitigung der flüchtigen Produkte, die in den unbearbeiteten kohlenstoffhaltigen Werkstücken enthalten sind, die nicht oxidierende Gasatmosphäre an der Oberfläche der kohlenstoffhaltigen Werkstücke (Werkstücke ohne Schutzpulverüberzug) mit einer Gasfront zirkuliert, die sich mit einer Geschwindigkeit von mindestens 0,5 cm/min und vorzugsweise 5 cm/min bis 30 cm/min vorwärts bewegt.

4. Verfahren nach Anspruch 3, bei dem die nicht oxidierende Gasatmosphäre vorzugsweise aus den Gasen Stickstoff, Argon und Helium gewählt wird.

5. Verfahren nach einem der Ansprüche 1 bis 4, bei dem die Freigabe der mechanischen Spannungen vor dem Abgang der flüchtigen Produkte erfolgt, indem eine Erhitzungsgeschwindigkeit der unbearbeiteten kohlenstoffhaltigen Werkstücke gewählt wird, die bis zu einer Temperatur von 200°C weniger als 100°C/h beträgt und um so niedriger ist, als die Abkühlungsgeschwindigkeit der unbearbeiteten kohlenstoffhaltigen Werkstücke in der Phase a) hoch ist.

6. Verfahren nach einem der Ansprüche 1 bis 5, bei dem die Temperaturanstiegsgeschwindigkeit vom Strom der entweichenden flüchtigen Produkte abhängig ist, so daß ein vorbestimmter Strom erhalten wird.

7. Verfahren nach Anspruch 6, bei dem der vorbestimmte Strom zwischen 5 und 65 Masse-% der Gesamtmasse an flüchtigen Produkten / h gehalten wird.

8. Verfahren nach Anspruch 7, bei dem der vorbestimmte Strom vorzugsweise zwischen 20 und 40 Masse-% der Gesamtmasse an flüchtigen Produkten / h gehalten wird.

9. Verfahren nach einem der Ansprüche 1 bis 8, bei dem das Verhältnis "Masse flüchtiger Produkte / Gasmasse der nicht oxidierenden Atmosphäre" in der Gasatmosphäre, die die zu brennenden Werkstoffe während des Brennens umgibt, auf kleiner als 3 und vorzugsweise kleiner als 1 gehalten wird.

10. Verfahren nach Anspruch 9, bei dem zur Reduzierung des Gasverbrauchs auf das strikte Minimum die Gasmenge von der Verflüchtigungsgeschwindigkeit der flüchtigen Produkte abhängig gemacht ist, so daß das Verhältnis während der gesamten Brennphase einen etwa konstanten und bei 1 liegenden Wert beibehält.

11. Verfahren nach einem der Ansprüche 1 bis 10, umfassend eine Phase d), in der die gebrannten kohlenstoffhaltigen Werkstücke durch Gasphasenabscheidung (CVD) verdichtet werden, welche Phase in demselben Ofen durch Kracken eines kohlenstoffreichen Gases (Methan oder Erdgas) bei reduziertem Druck und Temperaturen zwischen 800 und 1200°C durchgeführt wird, so daß verdichtete kohlenstoffhaltige Werkstücke enstehen.

12. Verfahren nach einem der Ansprüche 1 bis 11, umfassend eine Phase c), in der die gebrannten kohlenstoffhaltigen (im CVD-Verfahren verdichteten oder nicht verdichteten) Werkstücke graphitisiert werden, welche Phase in demselben Ofen ohne Isoliermaterial in nicht oxidierender, die gebrannten kohlenstoffhaltigen Werkstücke umgebender Atmosphäre durchgeführt wird (typischerweise Stickstoff- oder Argonatmosphäre bei atmosphärischem Druck oder reduziertem Druck oder unter Vakuum), indem die gebrannten kohlenstoffhaltigen Werkstücke mit einer Geschwindigkeit von 400°C bis 1900°C/h und vorzugsweise etwa 800°C/h auf eine Temperatur von mindestens 2300°C erhitzt werden.

13. Verfahren nach Anspruch 12, bei dem sich an die Graphitisierungsphase c) eine Verdichtungsphase anschließt, um die Abkühlung eines graphitisierten Werkstückes für dessen weitere Verdichtung in demselben Ofen auszunutzen.

14. Verfahren nach einem der Ansprüche 1 bis 13, bei dem der Ofen mit Mitteln versehen ist, mit denen die Wärmeenergiezufuhr reguliert und die Temperatur der kohlenstoffhaltigen (unbearbeiteten oder gebrannten, graphitisierten oder nicht graphitisierten, verdichteten oder nicht verdichteten) Werkstücke gesteuert werden kann, sowie mit Mitteln zur Regulierung des Spülgasstromes, um die Beschaffenheit, den Druck und die Menge der Gasatmosphäre, die die kohlenstoffhaltigen Werkstücke umgibt, zu kontrollieren und auf diese Weise nach vorgegebenen Anweisungen die Phasen b) und eventuell c) und/oder d) des Verfahrens automatisch durchführen zu können.

15. Verfahren nach Anspruch 14, bei dem der Ofen mit Mitteln versehen ist, mit denen der Strom der entweichenden flüchtigen Produkte gemessen werden kann, sowie mit Mitteln, um in Abhängigkeit von diesem Strom den Spülgasstrom und die Wärmeenergiezufuhr so zu regeln, daß der Strom der entweichenden flüchtigen Produkte (Menge der flüchtigen Produkte, die pro Stunde entweichen) auf einem vorbestimmten Wert gehalten wird.

16. Verfahren nach Anspruch 14, bei dem der Ofen mit Mitteln versehen ist, mit denen eine vorbestimmte zeitgebundene Temperaturkurve (insbesondere Anstiegsgeschwindigkeit), die sich aus vorher durchgeführten Testen ergibt, gespeichert und die Temperatur der kohlenstoffhaltigen Werkstücke gemäß der Temperaturkurve so gesteuert werden kann, daß die effektive Temperatur der kohlenstoffhaltigen Werkstücke mit der Zeit der Temperaturkurve folgt.
